# EUROPEAN PATENT SPECIFICATION

(11) **EP 2 376 741 B1**
(45) Date of publication and mention of the grant of the patent: **13.03.2013**
(21) Application number: 09775246.3
(22) Date of filing: 08.12.2009
(51) Int. Cl.: E21B 33/038, F16L 37/33

(54) **HYDRAULIC COUPLING**
HYDRAULISCHE KUPPLUNG
COUPLAGE HYDRAULIQUE

(30) Priority: 09.12.2008 GB 0822375
(43) Date of publication of application: 19.10.2011
(73) Proprietor: Bifold Fluidpower Limited, Middleton M24 1SW (GB)
(72) Inventor: RENSHAW, James, Robert, Cheshire SK9 6HD (GB); DENNIS, Michael, Thomas, West Yorkshire HD6 2QR (GB)
(74) Representative: Every, David Aidan
(86) International application number: PCT/GB2009/002841
(87) International publication number: WO 2010/067060

(56) References cited:
- US-A- 3 431 942
- US-A- 3 477 468
- US-A- 3 482 602
- US-A- 3 646 964
- US-A- 4 465 096
- US-A- 4 486 060
- US-B1- 6 516 831

## Description

The present invention relates to a hydraulic coupling and more particularly, but not exclusively, to such a coupling of the kind that is used to interconnect hydraulic fluid flow lines in sub sea applications.

Hydraulic couplings are used, for example, to interconnect hydraulic fluid lines associated with sub sea wellheads and/or the assembly of valves, spools and other fittings known in the drilling industry as the "christmas tree". The hydraulic fluid, which may be, for example, control fluid or an injected chemical for cleaning or otherwise treating the pipeline, the well, or christmas tree components, may be supplied under pressure from a floating vessel or a shore location. The couplings generally comprise male and female connectors having seals that are disposed at the junction between them when the coupling is complete. In many applications multiple hydraulic lines are bundled together into an umbilical string and multiple couplings are required to interconnect the respective lines. In such an arrangement the connectors are supported on respective manifold plates (often referred to in the art as "stab plates") that are brought together to couple the connectors, and therefore the lines, together. The stab plates are typically transported and brought into register either manually by sub sea divers or by using a remote operated vehicle (ROV).

In one typical hydraulic coupling the male and female connectors are in the form of cylindrical bodies with internal bores. At a mating end of each connector the bore is of a relatively large diameter for sealed engagement with the mating end of the other connector and at the other end the bore has a relatively small diameter where it is connected to the hydraulic line via a check valve. The male connector is inserted axially into the relatively large diameter bore of the female connector and sealed thereto by a seal located in the bore. When the connectors are sealed, further axial movement causes actuators associated with the respective check valves to be displaced such that they are open and allow hydraulic fluid to flow through the sealed coupling. The seals prevent ingress of seawater into the hydraulic fluid line and the egress of hydraulic fluid out of the coupling. When the male and female connectors are disconnected the check valves are biased to a closed position so that hydraulic fluid cannot leak out into the environment.

One of the problems associated with such couplings is the large force required to connect or disconnect them, when the coupling is filled with hydraulic fluid. When the male and female connectors are engaged and moved axially towards each other to complete the connection, a force has to overcome the resistance provided by a small volume of incompressible seawater trapped in the internal bores by the seals. The forces acting on the seals serve to resist connection or disconnection, particularly under the hydrostatic head of seawater. Disconnection can be a problem as a low pressure or partial vacuum is created within bores that serves to resists disengagement of the male and female connectors. The forces required to connect and disconnect are multiplied when a plurality of such couplings are used on a pair of stab plates.

The check valves in hydraulic couplings of the kind described above are generally in the form of poppet valves with a conical or frusto-conical valve member whose outer face is designed to seal against a corresponding valve seat surface defined in the internal bore. The effective sealing of such valves can be problematic as it is important to manufacture the respective surfaces to a fine tolerance to ensure a good seal. In some instances the valve seat is defined at a significant axial distance along the inside of the connector and it can be difficult to achieve the required quality of finish in the machining process.

In the event that a check valve does not perform to the requisite standard the coupling is generally removed and replaced in its entirety.

US 4,482,602 describes a hydraulic coupler for releasably connecting a pair of conduits. A male body member is connected to a first conduit and a female body member connected to a second conduit. A spring biased ball check valve in each body member contains fluid in the conduit A spring means in the female body exerts unseating pressure against the ball check valves when the body members are coupled together.

It is one object of the present invention to obviate or mitigate the aforementioned disadvantages. It is another object of the present invention to provide for an alternative, or improved, hydraulic coupling.

According to a first aspect of the present invention there is provided a hydraulic coupling comprising a male connector having a body defining a male member, an internal bore in the body and a first ball check valve for controlling fluid flow through the internal bore, a female connector having a body defining an internal bore with a chamber for receipt of the male member and a second ball check valve for controlling fluid flow through the internal bore, the male and female connectors each having a respective mating end, an actuator disposed between the first and second ball check valves for moving the first and second ball check valves between an open position in which hydraulic fluid may flow through the respective internal bore and a closed position in which the flow is interrupted, depending on the distance between the first and second ball check valves, the actuator not being fixed to either of the first and second ball check valves, the male and female connectors being movable between an uncoupled position In which the mating ends are separated and the first and second ball check valves are in the closed position and a coupled position in which the male and female connectors are engaged at their mating ends and extend along a longitudinal axis, characterised in that the first and second check valves each forming part of respective first and second removable check valve assemblies, each assembly being accessible and removable from a mating end a respective one of the male and female connectors, the first and second check valve assemblies each comprising a removable cartridge defining the valve member, the valve seat and a valve cage, the valve cage supporting the valve member.

The ability to remove the check valves assemblies from the mating ends enables the valves to be replaced, service or repaired in-situ without having to remove the whole coupling. This is much quicker and easier than compared to prior art hydraulic couplings.

The first and second check valves may be ball check valves. Each ball check valve may comprise a ball valve member biased against a valve seat by a biasing member such as a spring. The spring may be supported on a member such as a spigot that limits travel of the ball valve member away from the valve seat. The valve seat may comprise a principal seat which may, for example, be made of PEEK and a back-up seat, that may for example, comprise an annulus of metal.

The male and female connectors may each comprise an outer body with a removable insert. The first or second check valve may be removable once the respective removable insert has been removed. The outer body of the female and the male connectors may be substantially identical.

The removable insert of the male connector may define the male member and the removable insert of the female connector may define the chamber. The removable inserts may be threadedly connected in the respective outer bodies and they may abut or receive a respective one of the first and second check valves.

The outer bodies may each define a port for connection to a hydraulic line. The connection may be provided, for example, by a thread defined on a surface that defines the port.

The first and second check valves may be movable by the actuator to interrupt or permit flow through the respective port to the hydraulic line.

The male member may have an engagement portion that occupies the chamber of the female connector in a sealed relationship when in the coupled position. The engagement portion may have an external surface for sealing against an internal surface of the chamber.

A first annular seal may be disposed in the chamber of the female connector, the sealed relationship being provided by the first annular seal in sealing engagement with the external surface of the engagement portion. A second annular may seal between the external surface of the engagement portion and the internal surface of the chamber.

The outer bodies may each define a port for connection to a hydraulic line.

The male and female connectors may each comprise an outer body with a removable insert. The removable insert of the male connector may define the male member and the removable insert of the female connector may define the chamber. The removable inserts may each abut a respective one of the check valves.

The male and female connectors may each comprise an outer body with a removable insert which may be removably connected by any suitable connection means including for example a thread, a bayonet type fitting or any suitable latched connection. This provides for a modular configuration and the outer bodies of the female and the male connectors may be substantially identical and therefore interchangeable. The removable insert of the male connector may define the male member and the removable insert of the female connector may define the chamber. The removable insert for the male connector may abut the first check valve and the removable insert for the female connector may abut the second check valve.

The removable insert of the male connector may project from the outer body of the male connector and the removable insert of the female connector may project from the outer body of the female connector, the projecting part of the male insert being received in the chamber of the female connector and the projection part of the female insert being received between the outer body and the insert of the male connector.

The outer bodies may receive the respective check valves whereas the inserts may be designed to interconnect the connectors of the coupling. The removable insert may be sealed to the respective outer body of each connector by an appropriate seal. The internal bore of the male connector may comprise a first portion defined by the outer body and which may house the first check valve and a second portion defined by the removable insert and which may receive the actuator.

The outer bodies of each male and female connector may each define a port for connection to a hydraulic line. The first check valve may be disposed between the removable insert of the male connector and the respective port and similarly the second check valve may be disposed between the removable insert of the female connector and the respective port.

The valve cartridge may comprise a stop that limits the length of travel of the valve member away from the valve seat.

Specific embodiments of the present invention will now be described, by way of example only, with reference to the accompanying drawings, in which;
Figure 1 is a cross-section view along line A-A of figure 2, the plane of the section intersecting the longitudinal axis of a hydraulic coupling in accordance with at least one aspect of the present invention, the coupling shown disconnected and mounted on respective supports;
Figure 2 is an end view of the coupling of figure 1;
Figure 3 is a view corresponding to that of figure 1 with the coupling shown in a position just before being fully coupled;
Figure 4 is a view corresponding to those of figures 1 and 3, with the coupling shown fully coupled;
Figure 5 is an axial cross-section of an alternative coupling embodiment in accordance with at least one aspect of the present invention, the coupling shown disconnected;

Figure 6 is a view corresponding to that of figure 5, with the coupling shown in a first partially coupled position;
Figure 7 is a view corresponding to that of figure 5, with the coupling shown in a second partially coupled position; and
Figure 8 is a view corresponding to that of figure 5, with the coupling shown fully coupled.

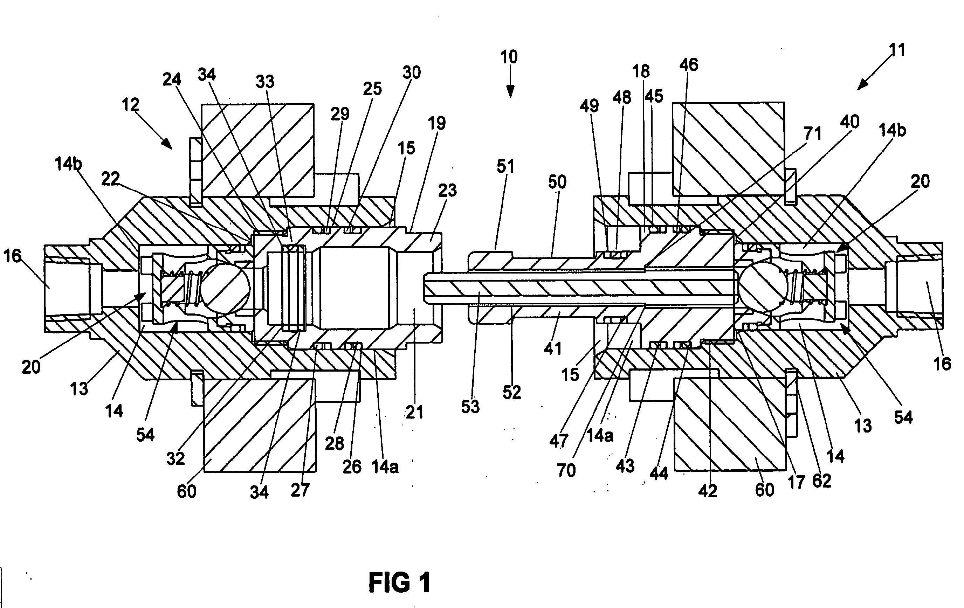

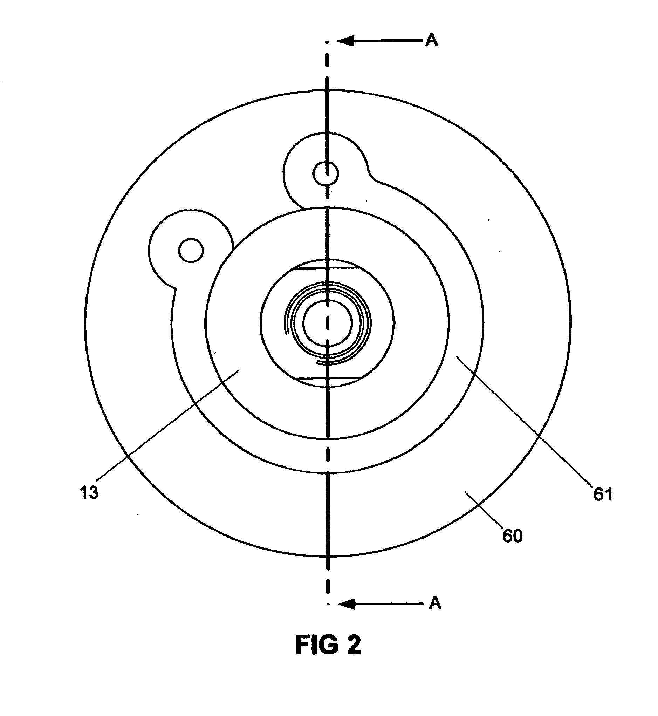

Referring now to the figures 1 to 4 of the drawing the hydraulic coupling, indicated generally by reference numeral 10, comprises male and female connectors 11, 12 both of which are generally cylindrical and have identical outer bodies 13 each with an interior bore 14.

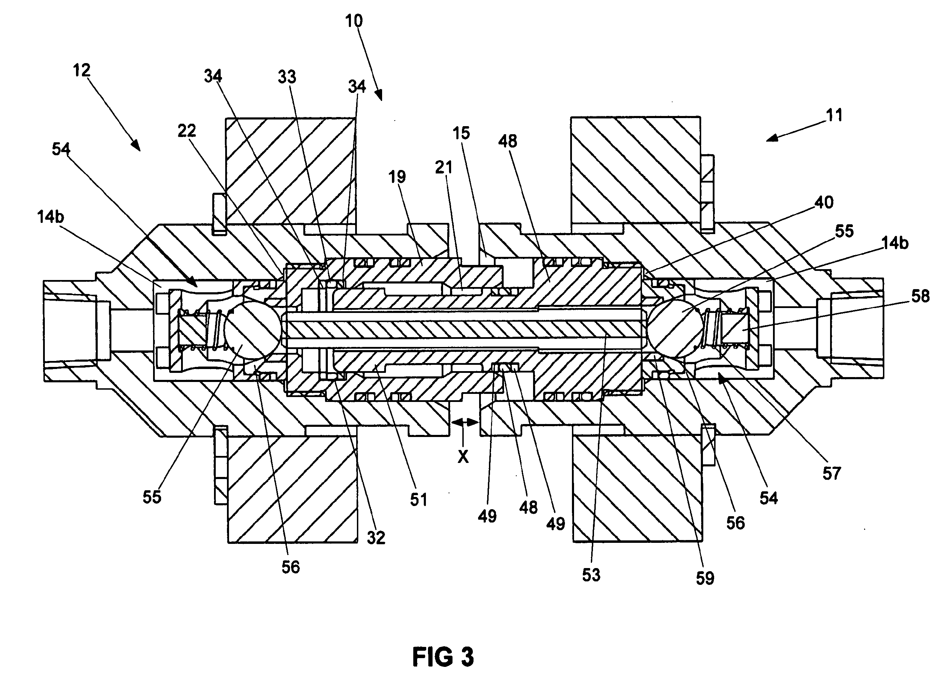

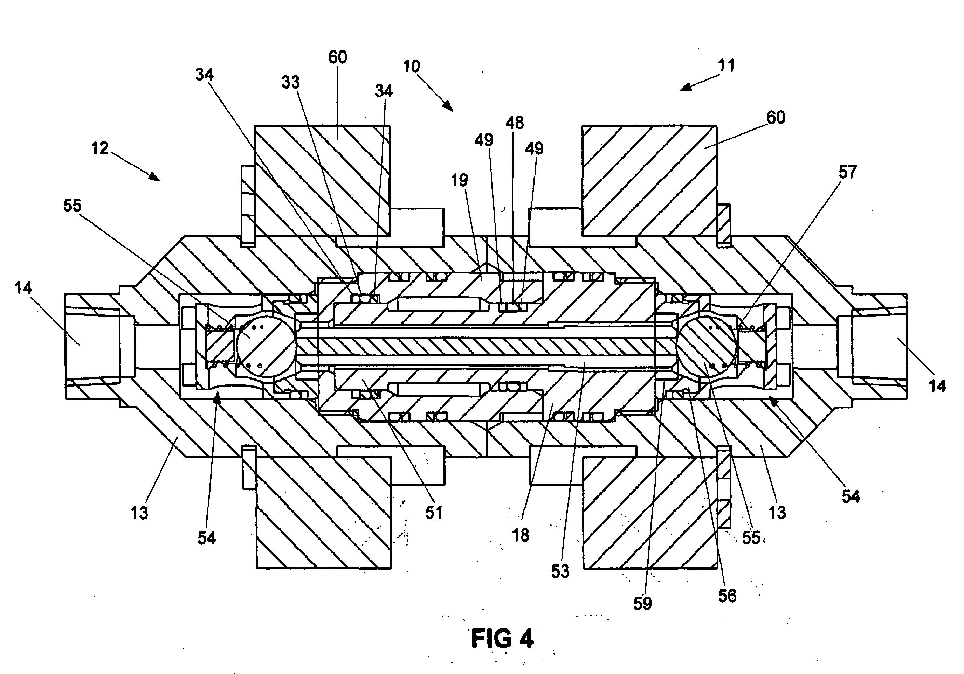

In figure 1, the male and female connectors 11, 12 are depicted in coaxial alignment just prior to their connection. They are brought into register by relative axial movement towards each other to a position as shown in figure 3 where they are almost fully coupled and then further moved in the same direction to complete the engagement and provide a sealed connection as shown in figure 4.

Each of the interior bores 14 has a relatively large diameter opening 15 at a mating end and a relatively small diameter port 16 at the opposite end. The port 16 is internally threaded for connection to an end fitting of a hydraulic fluid line (neither of which are shown in the figures). From the large diameter opening 15 the internal bore 14 extends rearwardly towards the port 16 and is radially inwardly stepped at 17 such that it separates the bore 14 into a first chamber 14a that is designed to receive a male or female nose insert 18, 19 and a second bore 14b in which a check valve assembly 20 is disposed.

The female nose insert 19 is generally cylindrical with an internal bore defining a chamber 21 for sealing engagement with the male nose insert 18. The insert 19 has a first end 22 that abuts the check valve assembly 20 and a second end 23 for mating with the male nose insert 18 of the male connector 11. An external surface of the female nose insert 19 has a threaded portion 24 at the first end 22 to allow screw connection to a corresponding threaded portion in the wall of the internal bore 14 of the outer body 13. Further towards the second end 23 of the insert 19, the outer surface has a pair of axially spaced annular grooves 25, 26 designed to receive seal elements for sealing against the internal surface of the outer body 13. The seal elements in each groove 25, 26 each comprise an O-ring seal 27, 28 and a back-up annular PTFE seal 29, 30. These serve to seal together the two parts (i.e. the outer body 13 and the female nose insert 19) of the female connector 12 against the ingress or egress of fluid. It is to be appreciated that other appropriate seal elements may be used. The surface of the internal chamber 21 of the female nose insert 19 similarly has an annular groove 32 disposed axially between the groove 25 and the first end 22 and receives an O-ring seal 33 disposed between a pair of PTFE secondary seals 34 (it will again be appreciated that any suitable sealing arrangement may be provided). This seal arrangement is designed to provide a sealed connected between the male and female connectors 11, 12 when fully coupled together.

The male nose insert 18 has a first end 40 for engagement with the check valve assembly 20 and an elongate second end 41 for connection to the female nose insert 19. The first end 40 has substantially the same diameter as the corresponding part of the female nose insert 19 and the outer surface has a threaded section 42 (at the first end 40) for screw-threaded engagement with a corresponding threaded portion defined on the surface of the internal bore 14 of the outer body and a pair of axially spaced annular grooves 43, 44 for receipt of seal elements. Each of the annular grooves 43, 44 houses an O-ring seal 45 and a back-up PTFE seal 46 for sealing engagement with the surface of the inner bore 14 of the outer body 13. Once again, it is to be appreciated that any suitable sealing arrangement may be provided. The second end 41 is elongate and designed to be received in the chamber 21 of the female nose insert 19. It has a further annular groove 47 defined on its external surface, adjacent to the intermediate portion 41 and for receipt of sealing elements designed to seal with the female nose insert 19 when the two connectors 11, 12 are engaged. The sealing elements are identical to those provided in groove 32 of the female nose insert 19 and comprise an O-ring 48 sandwiched between PTFE secondary annular seals 49. The second end 41 has a further reduced diameter portion 50 defined between the region where the seals 48, 49 are supported and a terminal tip 51 designed to seal against the seals 33, 34 provided in the female nose insert 19.

The male nose insert 18 is penetrated by an internal bore 52 that receives an elongate actuator pin 53 that has the shape of a cross in cross-section. There is a small radial clearance between the pin 53 and the bore. This clearance together with the spaces between the limbs of the cross afford paths for hydraulic fluid to flow along the pin 53 when the coupling is complete. The actuator pin 53, which projects slightly from the first end 40 and more significantly from the second end 50, is not fixed to either of the check valve assemblies 20. It is held captive in the bore 52 by a stepped shoulder 70 that engages with a corresponding stepped shoulder 71 formed in the internal surface of the bore 52 to prevent the pin 53 being withdrawn out of the mating end of male nose insert 19. The engagement of the stepped shoulders 70, 71 thus limit movement of the actuator away from the check valve assembly of the male connector 11.

The check valve assemblies 20 are each identical in the form of a cartridge 54 having a plastics or metal cage that supports a valve ball 55 and its seat 56. The cartridge 54 is received in the second chamber 14b of the bore 14 with the cage receiving the valve ball 55 which is retained in place by an annular valve seat 56 of any suitable material such as, for example, PEEK (polyetheretherketone) that abuts against the first end 22, 40 of the respective female or male nose insert 19, 18. The ball 55 is biased towards the respective valve seat 56 by a spring 57 supported on a spigot 58 that also acts to limit the travel of the ball 55 away from its seat 56. A small annulus of metal 59 is received in the valve seat 56 and also abuts the first end 22, 40 of the respective insert 19, 18 and serves as a back-up seat to the PEEK seat 56.

It will be seen from figure 1 that when the male connector 11 is assembled such that the male nose insert 18 is secured to the outer body 13 by the threads 42, its second end 41 projects significantly from the large opening 15 whereas the first end 40 abuts against the valve seat 56 and back-up seat 59 of the check valve cartridge 54 with one end of the actuator pin 53 projecting from the tip 51 of the second end 41 and the opposite end abutting against the ball 55 of the check valve cartridge 54.

Similarly, when the female connector 12 is assembled its second end 23 projects slightly from the large opening 15 of the outer body 13.

In each connector 11, 12 the check valve assembly 20 is biased closed by means of the spring 57 urging the ball 55 against the seat 56 such that hydraulic fluid flowing from the connected line into the respective connector 10, 11 through the port 16 is prevented from egressing into the internal bores 14.

In order to connect together the two halves of the coupling 10, the second ends 23, 41 of the male and female nose inserts 18, 19 are presented to each other as shown in figure 1. The longitudinal axes of the two connectors 11, 12 are aligned such that the second end 41 of the male nose insert 18 can be received in the chamber 21 of the female nose insert 19 and the second end 23 of the female nose insert 19 can be received within the outer body 13 of the male connector 11 when the two connectors 11, 12 are moved axially towards one another as depicted in figure 3. In this position the two connectors 11, 12 are brought into register but are not fully engaged and are not yet sealed to each other. In particular, the surface of the chamber 21 of the female nose insert 19 is about to pass over the seals 48, 49 on the outer surface of the second end of the male nose insert 18 and, similarly the outer surface of the tip 51 of the second end of the male nose insert 18 is about to pass inside the seals 33, 34 in the internal annular groove 32 of the female nose insert 19. At this point the ends of the actuator pin 53 abut the respective balls 55 of the check valve assemblies 20. Prior to this point any seawater trapped in the chamber 21 of the female nose insert 19 has been allowed to escape by virtue of a small radial clearance between the external surface of the second end of the male nose insert 18 and the internal surface of the chamber 21 of the female nose insert 19.

In order for the two connectors 11, 12 to become fully sealed to each other and for the two check valves 20 to open, the connectors 11, 12 must be axially displaced further towards each other by the very short distance x shown in figure 3 until the outer bodies 13 abut one another.

The connectors 11, 12 are shown fully engaged in figure 4. In this position the radially inner surface of seals 33, 34 of the female nose insert 19 are supported on a sealing surface defined on the outer surface of the tip 51 of the male nose insert 18 and the radially outer surface of the seals 48, 49 on the outer surface of the male nose insert 18 are brought into engagement with a sealing surface defined by the inner surface of the chamber 21 of the female nose insert 19. At substantially the same time the ends of the actuator pin 53 forces the balls 55 of the check valve cartridges 54 from their respective seats 56 against the force of the respective biasing springs 57 so as to open the valves and allow hydraulic fluid to flow through the coupling 10 via the paths defined by the actuator pin 53.

The two connectors 11, 12 are shown mounted on respective supports 60 which in this case are designed to receive only one connector each. Each of the connectors 11, 12 is received in an aperture in the respective support 60 and is retained in position by a circlip 61 that is received in an annular groove 62 in the external surface of the outer body 13. In another embodiment 11, 12 the connectors may be welded or otherwise fixed to their supports 60. In a yet further embodiment the supports 60 may be designed to receive multiple connectors 11, 12 that are coupled to each other when the opposite supports 60 are aligned and brought together.

The provision of seals 33, 34 and 48, 49 at opposite, axially spaced, ends of the mating parts of the male and female connectors 11, 12 affords a secure sealing arrangement. Moreover, by ensuring that the sealing surface of each sealing arrangement is at the same diameter, the respective forces on the seals are balanced such that there is no tendency to inhibit connection or separation of the connectors 11, 12.

The seals 33, 34 and 48, 49 are positioned such that sealing between the male and female connectors 11, 12 is made effective just as the check valve assemblies 20 are opened by the actuator pin 53. This means that any remnant of seawater left in the chamber 21 can pass into the hydraulic line. The sealing is configured such that it does not take effect until the connectors 11, 12 are almost fully engaged (between the positions depicted in figures 3 and 4) so that the trapped volume of seawater is substantially negligible and significantly less than in prior art couplings. Similarly, the arrangement allows easy disconnection of the coupling 10 as the check valve 20 is free to close at the point the sealing is broken so that the separation force does not have to act against the force applied by a partial vacuum.

The use of ball check valves is beneficial over conventional poppet valve designs as the contact sealing area is smaller and is not reliant to the same degree on machining tolerances and surface finishes, resulting in lower spring forces required to hold the valves in the closed positions, leak free.

The above described design lends itself to a modular configuration in which a single outer body 13 and check valve cartridge 54 can be used for both the male and female connectors 11, 12 with just the nose inserts 18, 19 being selected to determine whether the connector is male or female. The screw-threaded connection between the inserts 11, 12 and the outer bodies 13 allows for simplified manufacture and assembly. Moreover, it allows for ease of servicing, repair or maintenance of the check valve cartridges 54 as they can be accessed and removed easily from the mating end of each of the connectors 11, 12 in- situ i.e. without the need to remove the whole connector 11, 12 from its respective support 60. The male or female nose insert 18, 19 is simply disconnected from the respective outer body 13 by unscrewing it to provide access to the check valve cartridge 54.

Each of the seal arrangements is housed in grooves 32, 47 which provide protection to the seals when under pressure. Moreover the provision of secondary seals 34, 49 affords additional security.

The main valve seat (PEEK) 55 is provided with a back-up metal annulus 57 that not only prevents permanent deformation of the main seat 55 at high operating temperatures but also provides an emergency seat should the main seat 55 fail.

It is will be appreciated by one of ordinary skill in the art that the invention has been described by way of example only, and that the invention itself is defined by the claims. Numerous modifications and variations may be made to the exemplary design described above without departing from the scope of the invention as defined in the claims. For example the check valves may be of any suitable form. Moreover, the material used for each component can be varied to comply with the temperature or pressure requirements of the particular application.

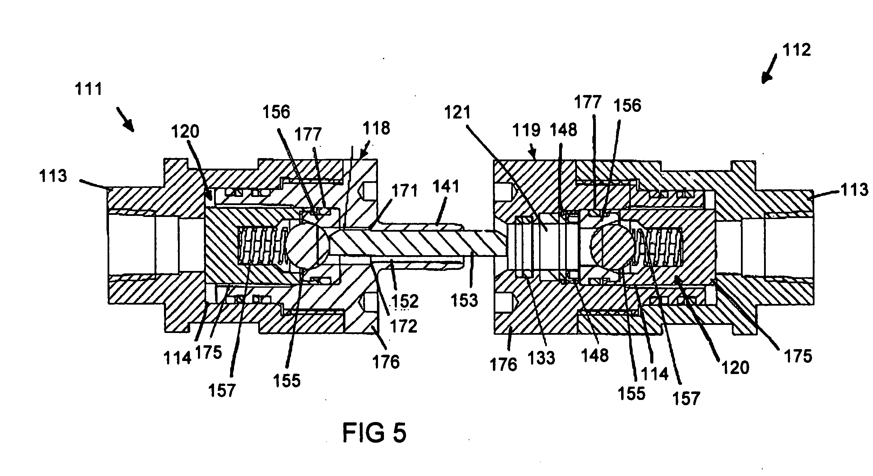

A second embodiment of the hydraulic coupling having many design features similar to those of the coupling of figures 1 to 4 will now be described with respect to figures 5 to 8. Components that correspond to those of the embodiment of figures 1 to 4 have been given the same reference numeral but increased by 100 and are not further described except insofar as they differ from their counterparts.

The male and female parts of the hydraulic coupling of figures 5 to 8 are shown separate from any support such as that indicated by reference numeral 60 in the above embodiment but it will be understood that it is intended to be used in the same manner. The coupling differs primarily in that seals between the male and female connectors are provided in the female connector only and in that the valves are positioned closer to the mating ends of each connector so that the actuator can be made shorter in length. This renders it less susceptible to damage in circumstances where large forces are required to connect and disconnect the coupling.

The male and female connectors 111,112 again comprise identical outer bodies 113 each with an interior bore 114. In figure 5 the male and female connectors are shown separated before connection and in coaxial alignment. The interior bores 114 each receive, as before, a respective male and female nose insert 118, 119. In contrast to the inserts 18, 19 of the previous embodiment, the internal bores in these inserts 118, 119 are configured to receive the check valve assemblies 120 which are again in the form of removable cartridges. Each cartridge comprises a cage 175 and a seat 156 which are connected together and receive between them a ball 155. The cage supports a spring 157 that acts on one side of the ball 155 to bias it towards the seat 156. As in the previous embodiment the seat may take any form and material but in one example it is an annular component of PEEK. The outer surface of the cartridge has a groove in which an O-ring seal resides 177, the seal acting against an internal surface of the respective nose insert 118, 119.

The actuator 153 is again an elongate member that is received in the internal bore 152 of the male nose insert 118. In this particular embodiment the actuator is substantially triangular in cross-section although it is to be appreciated that it may take any suitable shape provided it allows for the flow of fluid between its surfaces and the surface of the internal bore 152. As before, movement of the actuator away from the check valve assembly 20 of the male connector 111 is limited by inter-engagement of stepped shoulders 171, 172 defined on the actuator 153 and in the internal bore 152. These serve to hold the actuator in abutment with the ball 155 of the check valve assembly in the disconnected state shown in figure 5.

In each case the nose inserts 118, 119 have a flange 176 at the mating end that abuts against an end of the outer body 113. The flange 176 of the female nose insert 119 is thicker than that of the male nose insert 118 and defines the chamber 121 in which the second end of the male nose insert 118 is received.

The elongate second end 141 of the male nose insert 118 is designed to be received in the chamber 121 of the female nose insert 119 as before. The chamber 121 has two axially spaced seals 133, 148 that are received in respective grooves and are intended to seal against the outer surface of the elongate second end 141 of the male nose insert 118. The seals 133, 148 are axially spaced along the chamber 121. A first of the seals 133, nearest to the mating end, is in two parts comprising a graphite annulus alongside a PTFE annulus. A second of the seals 148 comprises a graphite annulus alongside a beryllium clamping ring. The two parts to the seal ensure there is a back-up seal provided in one of the parts fails. It will be understood that any suitable form and material for each seal may be used and that the back-up part of the seal is optional. For example, the graphite annulus may be replaced by any sort of elastomeric material.

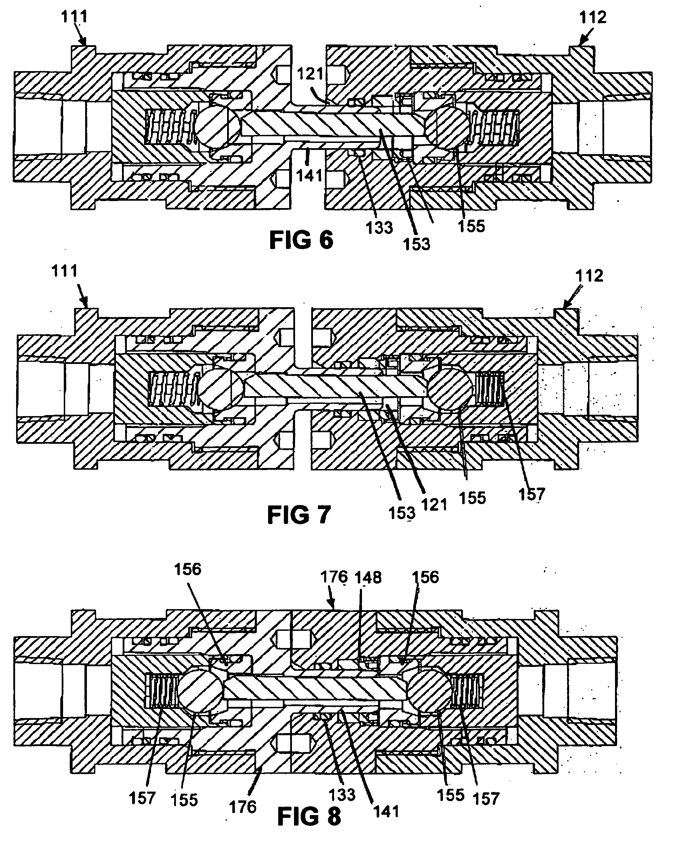

In figure 6 the male and female connectors 111, 112 have been moved axially towards one another such that the elongate second end 141 of the male nose insert 118 is received in the chamber 121 of the female connector 112 such that it is in a sealing relationship with the seal 133. At this point the leading end of the actuator 153 abuts the ball 155 of the check valve assembly 120 in the female connector 112. Further axial movement towards each other causes the actuator to move at the ball 155 in the female connector 112 away from its seat 156 against the biasing force of the compression spring 157, thereby opening the check valve 120 as shown in figure 7. This allows trapped fluid such as seawater to escape into the flow line. At this position the connectors 111,112 are almost fully coupled.

In figure 8 the connectors 111, 112 are shown fully engaged such that the flanges 176 of each nose insert 118, 119 are in abutment and the elongate second end 141 of the male nose insert 118 is sealed against the wall of the chamber 121 by both seals 133 and 148. It will be seen that both balls 155 are moved from their respective seats 156 against the force of the biasing springs 157 such that the hydraulic fluid can flow through the coupling.

The described and illustrated embodiments are to be considered as illustrative and not restrictive in character, it being understood that only the preferred embodiments have been shown and described and that all changes and modifications that come within the scope of the inventions as defined in the claims are desired to be protected. It should be understood that while the use of words such as "preferable", "preferably", "preferred" or "more preferred" in the description suggest that a feature so described may be desirable, it may nevertheless not be necessary and embodiments lacking such a feature may be fall within the scope of the invention as defined in the appended claims. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary.

## Claims

1. A hydraulic coupling (10) comprising;
a male connector (11) having a body (13) defining a male member (18), an internal bore (14) in the body and a first ball check valve (20) for controlling fluid flow through the internal bore (14);
a female connector (12) having a body (13) defining an internal bore (14) with a chamber (21) for receipt of the male member and a second ball check valve for controlling fluid flow through the internal bore (14),
the male and female connectors each having a respective mating end;
an actuator (53) disposed between the first and second ball check valves (20) for moving the first and second ball check valves (20) between an open position in which hydraulic fluid may flow through the respective internal bore (14) and a closed Position in which the flow is interrupted, depending on the distance between the first and second ball check valves (20), the actuator (53) not being fixed to either of the first and second ball check valves (20), the male and female connectors (11, 12) being movable between an uncoupled position
in which the mating ends are separated and the first and second ball check valves (20,20) are in the closed position and a coupled position in which the male and female connectors (11,12) are engaged at their mating ends and extend along a longitudinal axis;
**characterised by** the first and second check valves (20,20) each forming part of respective first and second removable check valve assemblies, each assembly being accessible and removable from the respective mating ends of the male and female connectors (11,12), the first and second check valve assemblies each comprising a removable cartridge (54) defining the valve member, the valve seat (56) and a valve cage, the valve cage supporting the valve member.

2. A hydraulic coupling according to claim 1, wherein each ball check valve (20) comprises a ball valve member biased against a valve seat by a spring (57) that is supported on a spigot (58) that limits travel of the ball valve member away from the valve seat (56).

3. A hydraulic coupling according to any preceding claim, wherein the male and female connectors (11,12) each comprise an outer body with a removable insert, the first or second check valve (20,20) being removable once the respective removable insert has been removed.

4. A hydraulic coupling according to claim 3, wherein the removable insert of the male connector (11) defies the male member and the removable insert of the female connector (12) defines the chamber.

5. A hydraulic coupling according to any one of claims 3 or 4, wherein the removable inserts are threadedly connected in the respective outer bodies (13).

6. A hydraulic coupling according to any one of claims 3 to 5, wherein the removable inserts each abut a respective one of the first and second check valves (20,20).

7. A hydraulic coupling according to any one of claims 3 to 6, wherein the removable inserts each receive a respective one of the first and second check valves (20,20).

8. A hydraulic coupling according to any one of claims 3 to 7, wherein the male member (18) has an engagement portion that occupies the chamber (21) of the female connector (12) in a sealed relationship when in the coupled position, the engagement portion having an external surface;
a first annular seal (48,49) disposed on the engagement portion of the male member (18),
a second annular seal (33,34) disposed in the chamber of the female connector (12);
the sealed relationship being provided by the first annular seal (48, 49) in sealing engagement with a first sealing surface defined by the chamber (21) and the second annular seal (33,34) in sealing engagement with a second sealing surface defined by the external surface of the engagement portion;
wherein in the coupled position the first and second annular seals are spaced apart in the chamber at opposite ends thereof and the distance between the first and second check valves is such that the actuator urges them to their open positions;
and wherein the first and second annular seals are disposed relative to the actuator such that they enter the sealing relationship substantially simultaneously with the actuator urging the first and second check valves to the open positions when the male and female connectors are moved from the uncoupled to the coupled position.

9. A hydraulic coupling according to any preceding claim, wherein the first and second check valves (20, 20) are movable by the actuator (53) to interrupt or permit flow through the respective port to the hydraulic line,

10. A hydraulic coupling according to claim 9, wherein one end of the actuator (53) is in abutment with the first ball check valve (20).

11. A hydraulic coupling according to claim 10, wherein the actuator (53) is supported in the internal bore of the male member (18).

12. A hydraulic coupling according to claim 11, wherein the actuator (53) has a stop feature for engagement with a surface defined in the internal bore of the male member (18) to limit its movement in the direction away from the first check valve (20).

13. A hydraulic coupling according to claim 12, wherein the actuator (53) is held in abutment with the first check valve (20) by the engagement of the stop feature with the surface defined in the internal bore (14).

## Patentansprüche

1. Hydraulikkupplung (10), die Folgendes umfasst:
einen Steckerverbinder (11), der ein Gehäuse (13), das ein Einsteckelement (18) definiert, eine innere Bohrung (14) in dem Gehäuse und ein erstes Kugel-Rückschlagventil (20) zum Regeln des Fluiddurchflusses durch die innere Bohrung (14) aufweist,
einen Buchsenverbinder (12), der ein Gehäuse (13), das eine innere Bohrung (14) mit einer Kammer (21) für die Aufnahme des Einsteckelements (18) definiert, und ein zweites Kugel-Rückschlagventil (20) zum Regeln des Fluiddurchflusses durch die innere Bohrung (14) aufweist,
wobei der Stecker- und der Buchsenverbinder jeder ein jeweiliges Passungsende aufweisen,
ein Stellglied (53), das zwischen dem ersten und dem zweiten Kugel-Rückschlagventil (20) angeordnet ist, um das erste und das zweite Kugel-Rückschlagventil (20) zu bewegen zwischen einer offenen Stellung, in der Hydraulikfluid durch die jeweilige innere Bohrung (14) fließen kann, und einer geschlossenen Stellung, in welcher der Durchfluss unterbrochen ist, in Abhängigkeit von dem Abstand zwischen dem ersten und dem zweiten Kugel-Rückschlagventil (20), wobei das Stellglied (53) weder an dem ersten noch an dem zweiten Kugel-Rückscblagventil (20) befestigt ist,
wobei der Stecker- und der Buchsenverbinder (11" 12) bewegt werden können zwischen einer nicht gekuppelten Stellung, in der die Passungsenden getrennt sind und sich das erste und das zweite Kugel-Rückschlagventil (20, 20) in einer geschlossenen Stellung befinden, und einer gekuppelten Stellung, in welcher der Stecker- und der Buchsenverbinder (11, 12) an ihren Passungsenden in Eingriff gebracht sind und sich entlang einer Längachse erstrecken,
dadurch gekenntzeichnet, dass das erste und das zweite Kugel-Rückschlagventil (20, 20) jedes einen Teil einer jeweiligen ersten bzw. zweiten abnehmbaren Rückschlagventil-Baugruppe bilden, wobei jede Baugnippe von den jeweiligen Passungsenden des Stecker- und des Buchsenverbinders (11, 12) zugänglich und abnehmbar sind, wobei die erste und die zweite Rückschlagventil-Baugruppe jede eine abnehmbare Kartusche (54) umfassen, die das Ventilelement, den Ventilsitz (56) und einen Ventilkorb definiert, wobei der Ventilkorb das Ventilelement trägt.

2. Hydraulikkupplung nach Anspruch 1, wobei jedes Kugel-Rückschlagventil (20) ein Kugel-Ventilelementumfasst, das gegen einen Ventilsitz durch eine Feder (57) vorgespannt wird, die an einem Zapfen (58) getragen wird, der einen Weg des Kugel-Ventilelements weg von dem Ventilsitz (56) begrenzt.

3. Hydraulikkupplung nach einem der vorhergehenden Ansprüche, wobei der Stecker- und der Buchsenverbinder (11, 12) jeder ein äußeres Gehäuse mit einem abnehmbaren Einsatz umfassen, wobei das erste und das zweite Kugel-Rückschlagventil (20) abnehmbar sind, sobald der jeweilige abnehmbare Einsatz abgenommen worden ist.

4. Hydraulikkupplung nach Anspruch 3, wobei der abnehmbare Einsatz des Steckerverbinders (11) das Einsteckelement definiert und der abnehmbare Einsatz des Buchsenverbinders (12) die Kammer definiert.

5. Hydraulikkupplung nach einem der Ansprüche 3 oder 4, wobei die abnehmbaren Einsätze schraubend in den jeweiligen äußeren Gehäusen (13) angeschlossen sind.

6. Hydraulikkupplung nach einem der Anspruche 3 bis 5, wobei die abnehmbaren Einsätze jeder an ein jeweiliges von dem ersten und dem zweiten Rückschlagventil (20, 20) anstoßen.

7. Hydraulikkupplung nach einem der Ansprüche 3 bis 6, wobei die abnehmbaren Einsätze jeder ein jeweiliges von dem ersten und dem zweiten Rückschlagventil (20, 20) aufnehmen.

8. Hydraulikkupplung nach einem der Ansprüche 3 bis 7, wobei das Einsteckelement (18) Folgendes aufweist: einen Eingriffsabschnitt, der die Kammer (21) des Buchsenverbinders (12) in einer abgedichteten Beziehung einnimmt, wenn sie sich in der gekuppelten Stellung befinden, wobei der Eingriffsabschnitt eine Außenfläche aufweist,
eine erste ringförmige Dichtung (48, 49), die an dem Eingriffsabschnitt des Einsteckelements (18) angeordnet ist,
eine zweite ringförmige Dichtung (33, 34), die in der Kammer des Buchsenverbinders (12) angeordnet ist,
wobei die abgedichtete Beziehung gewährleistet wird durch die erste ringförmige Dichtung (48, 49) in Abdichtungseingriff mit einer ersten Abdichtungsfläche, die durch die Kammer (21) definiert wird, und die zweite ringförmige Dichtung (33, 34) in Abdichtungseingriff mit einer zweiten Abdichtungsfläche, die durch die Außenfläche des Eingriffsabschnitts definiert wird,
wobei in der gekuppelten Stellung die erste und die zweite ringförmige Dichtung mit Zwischenraum entfernt voneinander in der Kammer an entgegengesetzten Ende derselben angeordnet sind und der Abstand zwischen dem ersten und dem zweiten Rückschlagventil derart ist, dass das Stellglied sie zu ihren offenen Stellungen drückt,
und wobei die erste und die zweite ringförmige Dichtung im Verhältnis zu dem Stellglied derart angeordnet sind, dass sie im Wesentlichen gleichzeitig damit, dass das Stellglied das erste und das zweite Rückschlagventil zu den offenen Stellungen drückt, wenn der Stecker- und der Buchsenverbinder von der nicht gekuppelten zu der gekuppelten Stellung bewegt werden, in die Ahdichtungsbeziehung eintreten.

9. Hydraulikkupplung nach einem der vorhergehenden Ansprüche, wobei das erste und das zweite Rückschlagventil (20, 20) durch das Stellglied (53) bewegt werden können, um einen Durchfluss durch den jeweiligen Anschluss zu der Hydraulikleitung zu unterbrechen oder zu erlauben.

10. Hydraulikkupplung nach Anspruch 9, wobei sich ein Ende des Stellgliedes (53) in Widerlager mit dem ersten Kugel-Rückschlagventil (20) befindet.

11. Hydraulikkupplung nach Anspruch 10, wobei das Stellglied (53) in der inneren Bohrung des Einsteckelements (18) getragen wird.

12. Hydraulikkupplung nach Anspruch 11, wobei das Stellglied (53) ein Anschlagmerkmal für einen Eingriff mit einer in der inneren Bohrung des Einsteckelements (18) definierten Fläche hat, um seine Bewegung in der Richtung, weg von dem ersten Rückschlagventil (20), zu begrenzen.

13. Hydraulikkupplung nach Anspruch 12, wobei das Stellglied (53) durch den Eingriff des Anschlagmerkmals mit der in der inneren Bohrung (14) definierten Fläche in Widerlager mit dem ersten Rückschlagventil (20) gehalten wird.

## Revendications

1. Couplage hydraulique (10), comprenant :
un connecteur mâle (11), comportant un corps (13) définissant un élément mâle (18), un alésage interne (14) dans le corps et un premier clapet de retenue à bille (20) pour contrôler l'écoulement de fluide à travers l'alésage interne (14) ;
un connecteur femelle (12), comportant un corps (13) définissant un alésage interne (14) avec une chambre (21) pour recevoir l'élément mâle (18), et un deuxième clapet de retenue à bille (20) pour contrôler l'écoulement de fluide à travers l'alésage interne (14) ;
les connecteurs mâle et femelle comportant chacun une extrémité d'accouplement respective ;
un élément d'actionnement (53), agencé entre les premier et deuxième clapets de retenue à bille (20), pour déplacer les premier et deuxième clapets de retenue à bille (20) entre une position ouverte, dans laquelle le fluide hydraulique peut s'écouler à travers l'alésage interne respectif (14), et une position fermée, dans laquelle l'écoulement est interrompu, en fonction de la distance entre les premier et deuxième clapets de retenue à bille (20), l'élément d'actionnement (53) n'étant pas fixé à l'un des premier et deuxième clapets de retenue à bille (20) ;
les connecteurs mâle et femelle (11, 12) pouvant se déplacer entre une position non accouplée, dans laquelle les extrémités d'accouplement sont séparées, les premier et deuxième clapets de retenue à bille (20, 20) se trouvant dans la position fermée, et une position accouplée, dans laquelle les connecteurs mâle et femelle (11, 12) sont engagés au niveau de leurs extrémités d'accouplcment et s'étendent le long d'un axe longitudinal ;
**caractérisé par** des premier et deuxième clapets de retenue (20, 20), faisant chacun partie de premier et deuxième assemblages de clapet de retenue amovibles, chaque assemblage étant accessible et amovible à partir des extrémités d'accouplement respectives des connecteurs mâle et femelle (11, 12), les premier et deuxième assemblages de clapet de retenue comprenant chacun une cartouche amovible (54), définissant l'élément de clapet, le siège du clapet (56) et une cage du clapet, la cage du clapet supportant l'élément de clapet.

2. Couplage hydraulique selon la revendication 1, dans lequel chaque clapet de retenue à bille (20) comprend un élément de clapet à bille poussé contre un siège du clapet par un ressort (57) supporté sur un tourillon (58), limitant le déplacement de l'élément de clapet à bille à l'écart du siège du clapet (56).

3. Couplage hydraulique selon l'une quelconque des revendications précédentes, dans lequel les connecteurs mâle et femelle (11, 12) comprennent chacun un corps externe avec un insert amovible, les premier et deuxième clapets de retenue (20, 20) pouvant être déplacés après le retrait de l'insert amovible respectif.

4. Couplage hydraulique selon la revendication 3, dans lequel l'insert amovible du connecteur mâle (11) définit l'élément mâle, l'insert amovible du connecteur femelle (12) définissant la chambre.

5. Couplage hydraulique selon l'une quelconque des revendications 3 ou 4, dans lequel les inserts amovibles sont connectés par filetage dans les corps externes respectifs (13).

6. Couplage hydraulique selon l'une quelconque des revendications 3 à 5, dans lequel les inserts amovibles butent chacun contre un des premier et deuxième clapets de retenue respectifs (20, 20).

7. Couplage hydraulique selon l'une quelconque des revendications 3 à 6, dans lequel les inserts amovibles reçoivent chacun un des premier et deuxième clapets de retenue respectifs (20, 20).

8. Couplage hydraulique selon l'une quelconque des revendications 3 à 7, dans lequel l'élément mâle (18) comporte une partie d'engagement occupant la chambre (21) du connecteur femelle (12) dans une relation étanche dans la position accouplée, la partie d'engagement comportant une surface externe ;
un premier joint annulaire (48, 49), agencé sur la partie d'engagement de l'élément mâle (18) ;
un deuxième joint annulaire (33, 34), agencé dans la chambre de connecteur femelle (12) ;
la relation étanche étant établie par le premier joint annulaire (48, 49), engagé de manière étanche dans une première surface d'étanchéité définie par le chambre (21), et le deuxième joint annulaire (33, 34), engagé de manière étanche dans une deuxième surface d'étanchéité définie par la surface externe de la partie d'engagement;
les premier et deuxième joint annulaires étant dans la position accouplée espacés l'un de l'autre dans la chambre, au niveau des extrémités opposées de celle-ci, la distance entre les premier et deuxième clapets de retenue étant telle que l'élément d'actionnement les pousse vers leur position ouverte ;
les premier et deuxième joints annulaires étant agencés par rapport à l'élément d'actionnement de sorte à établir la relation étanche avec l'élément d'actionnement de manière pratiquement simultanée, poussant les premier et deuxième clapets de retenue vers les positions ouvertes lorsque les connecteurs mâle et femelle sont déplacés de la position non accouplée vers la position accouplée.

9. Couplage hydraulique selon l'une quelconque des revendications précédentes, dans lequel les premier et deuxième clapets de retenue (20, 20) peuvent être déplacés par l'élément d'actionnement (53) pour interrompre ou permettre l'écoulement à travers l'orifice respectif vers la conduite hydraulique.

10. Couplage hydraulique selon la revendication 9, dans lequel une extrémité de l'élément d'actionnement (53) bute contre le premier clapet de retenue à bille (20).

11. Couplage hydraulique selon la revendication 10, dans lequel l'élément actionnement (53) est supporté dans l'alésage interne de l'élément mâle (18).

12. Couplage hydraulique selon la revendication 11, dans lequel l'élément d'actionnement (53) comporte une structure d'arrêt, destinée à s'engager dans une surface définie par l'alésage interne de l'élément mâle (18), pour limiter son déplacement dans la direction allant à l'écart du premier clapet de retenue (20).

13. Couplage hydraulique selon la revendication 12, dans lequel l'élément d'actionnement (53) est retenu dans sa position butant contre le premier clapet de retenue (20) par l'engagement de la structure d'arrêt dans la surface définie par l'alésage interne (14),
